# EUROPÄISCHE PATENTSCHRIFT

(11) **EP 1 482 079 B1**
(45) Veröffentlichungstag und Bekanntmachung des Hinweises auf die Patenterteilung: **11.07.2007**
(21) Anmeldenummer: 04011864.8
(22) Anmeldetag: 19.05.2004
(51) Int. Cl.: D02G 3/38, D02G 3/32, D02G 3/44

(54) **Textiler Faden, Flächengebilde und Körpergebilde hieraus**
Textile yarn, fabric and component made therefrom
Fil textile, tissu et composant forme à partir de celui-ci

(30) Priorität: 28.05.2003 DE 10324524
(43) Veröffentlichungstag der Anmeldung: 01.12.2004
(73) Patentinhaber: Bloch, Klaus, D-53757 Sankt Augustin (DE)
(72) Erfinder: Bloch, Klaus, D-53757 Sankt Augustin (DE)
(74) Vertreter: Wagner, Matthias

(56) Entgegenhaltungen:
- DE-A- 3 844 458
- US-A- 4 499 716
- US-B1- 6 240 716
- PATENT ABSTRACTS OF JAPAN Bd. 2003, Nr. 07, 3. Juli 2003 (2003-07-03) & JP 2003 079411 A (DU PONT TORAY CO LTD), 18. März 2003 (2003-03-18)

## Beschreibung

Die Erfindung bezieht sich auf einen textilen Faden mit einer Seele und die Seele umgebenden Multifilamentgarnen, textile Flächengebilde hieraus sowie deren Anwendung, beispielsweise für einen Faltenbalg.

Es sind bereits zahlreiche Varianten textiler Fäden mit einer elastischen Seele, die von Garnen aus anderen Materialien umwunden sind, bekannt, wie aus den nachfolgenden Druckschriften hervorgeht.

Beispielsweise werden in (1) Umwindungsgarne, Core-Garne oder Stretch-Core-Garne mit einer von zwei Garnen aus andersartigem Material kreuzweise umwickelten und gedehnten elastischen Seele, wie Elastan-Kern oder Lycra-Seele beschrieben, welche vorwiegend hochdehnbar sind und für Maschenwaren, wie Feinstrumpfwaren geeignet sind.

Aus DE 197 22 932 A1 ist ein antibakterielles Strickgarn mit einem Kernfaden bekannt, der von einem oder mehreren antibakteriellen Fäden umgeben ist, auf welche wiederum Deckfäden aufgebracht sind.

Aus der DE 195 06 227 A1 ist ein Garn bekannt, bei dem ein Lycra- oder Nylonfaden von mindestens einem Cellulosetriacetatfaden umwunden ist.

Aus DE 31 40 900 A1 ist ein elastischer heißklebender Faden bekannt, welcher einen elastischen Kern umfaßt, der mit mindestens einem weiteren Faden, welcher mindestens bereichsweise eine heißklebefähige Substanz trägt, umwunden ist und sich für die Anwendung bei Höschenwindeln eignet.

In der DE 1 862 736 U wird ein elastischer Zwirn beschrieben, bei dem eine Seele aus elastischen ungedehnten Polyamid-Kräuselkrepp-Garnen von Fäden oder Garnen normaler Dehnung umwunden ist.

In der JP 2003-079411 AA wird eine weiche schmiegsame und elastische Kordel beschrieben mit einer Seele aus elastischen Garnen und einer Ummantelung aus elastischen Garnen.

In der JP 2001-214340 AA wird ein gezwirntes Garn zur Verwendung in einem Polsterstoff für Autositze beschrieben, bei dem eine elastische Seele aus Polyester von Garnen mit niedrigem Schmelzpunkt, wie Nylon, umwunden sind.

Bei vielen Anwendungsgebieten von technischen Geweben, insbesondere auch in Verbund mit elastischen und/oder thermoplastischen oder duroplastischen Kunststoffen bestehen hohe Anforderungen an die mechanischen Eigenschaften der Gewebe und somit an die textilen Fäden und Garne, aus denen die Gewebe erzeugt werden. Insbesondere werden oftmals hohe Anforderungen an die Reißfestigkeit gestellt, ebenso an eine hohe Thermostabilität, d. h. hohe Temperaturbeständigkeit. Nun ist aber bei Synthesefasern eine hohe Reißfestigkeit stets mit einer sehr geringen Reißdehnung verbunden, wobei die Reißdehnung umso geringer ist, je höher die Reißfestigkeit eines Fadens ist. Bei hochfesten Fäden aus Synthesefasern mit einer Feinheitsreißfestigkeit von 2 cN/dtex und mehr sinkt die Reißdehnung auf Werte bis herab auf 2 % und weniger. Auch Fäden aus Synthesefasern mit hoher Temperaturbeständigkeit und zumindest einer hohen kurzzeitigen Gebrauchstemperatur gehören überwiegend zur Gruppe der hochfesten Synthesefasern mit geringer Reißdehnung.

Es gibt nun Anwendungsgebiete für technische Gewebe und technische Verbundgewebe, bei denen es wünschenswert ist, bei Beibehaltung der hohen Reißfestigkeit und der Temperaturbeständigkeit des Gewebes, d. h. der das Gewebe bildenden Fäden, die Reißdehnung zu erhöhen, um nicht nur die Fäden elastischer und dehnbarer zu gestalten, sondern auch die damit hergestellten Gewebe.

Bei der Weiterverarbeitung von Geweben durch Verformung zu dreidimensionalen Körpergebilden sind einer starken Verformung zur Ausbildung dreidimensionaler Körpergebilde Grenzen bei Einsatz von den bisher bekannten Geweben aus hochfesten Synthesefasern gesetzt, da ihrer Verformung Grenzen durch die niedrige Reißdehnung der hochfesten Synthesefasern gesetzt sind.

Die Erfindung schlägt zur Lösung des aufgezeigten Problems einen textilen Faden mit einer Seele und die Seele umgebenden Multifilamentgarnen vor, der hochfeste Multifilamentgarne aus organischen Synthesefasern mit einer Feinheitsreißfestigkeit von mindestens 3 cN/dtex und mit einer Reißdehnung kleiner 22 % aufweist, zur Ausbildung eines textilen Fadens mit einer der Reißfestigkeit des Multifilamentgarnes entsprechenden Reißfestigkeit vor, bei dem zur Erhöhung der Dehnbarkeit des textilen Fadens bei Erhalt der Festigkeit desselben eine gummielastische Seele aus einem Monofil aus einem Thermoplastischen Elastomer mit einer Reißdehnung von mindestens 35 % vorgesehen ist, welche von mindestens je einem der Multifilamentgarne in S-Richtung und/oder Z-Richtung umzwirnt ist. Durch die S- und/oder Z-Wicklung des Multifilamentgarnes ist dieses verschiebefest auf der gummielastischen Seele aufgebracht. Die Wickellänge des Multifilamentgarnes ist länger als die Länge der Seele, so daß die Seele gedehnt werden kann, wobei bei Durchmesserverringerung der Seele die gewickelten Multifilamentgarne nachgeben und eine zusätzliche Dehnung des textilen Fadens ermöglicht wird und damit eine über der Reißdehnung der Multifilamentgarne liegende Dehnung des textilen Fadens ermöglicht wird, und die Beanspruchung des textilen Fadens in Bezug auf die Reißdehnung erst bei erhöhter Dehnung erfolgt. Erfindungsgemäß wird die Dehnbarkeit des textilen Fadens umso größer, je größer der Durchmesser der gummielastischen Seele, d. h. des Monofils gewählt ist und die Länge des um die Seele gewickelten Multifilamentgarnes entsprechend ebenfalls vergrößert ist. Je größer der Durchmesser der Seele ist, desto größer wird die Wickellänge des Multifilamentgarnes und eine umso höhere Dehnbarkeit des textilen Fadens ist die Folge und damit ebenfalls eine erhöhte Dehnbarkeit eines aus solchen textilen Fäden gefertigten Flächengebildes.

Vorteilhafte Weiterbildungen des erfindungsgemäßen textilen Fadens sind den kennzeichnenden Merkmalen der Unteransprüche 2 bis 15 entnehmbar.

Als gummielastische Seele wird bevorzugt ein Monofil mit einem Durchmesser von mindestens 0,15 mm, der bis 1,0 mm oder mehr betragen kann. Ein Vorzugsbereich liegt bei 0,2 - 0,5 mm.

Als gummielastische Seele wird bevorzugt ein Monofil aus einem Thermoplastischen Elastomer mit einer Reißdehnung von mindestens 50 %.

Bevorzugte Thermoplastische Elastomere (TPE) sind solche auf Polyamidbasis (TPA) oder Copolyesterbasis (TPC) oder Urethanbasis (TPU). Die Polyamidelastomere sind Block-Copolymere mit harten Polyamid-Blöcken und weichen Polyether- und/oder Polyester-Blöcken. Die Thermoplastischen Elastomere auf Copolyesterbasis sind Block-Copolymere von Weichsegmenten aus Polyalkylenetherdiolen und/oder langkettigen aliphatischen Dicarbonsäureestern mit teilkristallinen PBT-Segmenten. Hierzu zählen beispielsweise Polyetherester. Die Polyurethan-Elastomere sind Block-Copolymere und entstehen durch Polyaddition langkettiger Diole mit aliphatischen Diisocyanaten. Zur Ausbildung textiler Fäden, die bei der späteren Weiterverarbeitung zu Flächengebilden und Körpergebilden höheren Verformungstemperaturen kurzzeitig ausgesetzt werden, werden für die gummielastische Seele Thermoplastische Elastomere bevorzugt, deren kurzzeitige Gebrauchstemperatur mindestens etwa 145°C beträgt. Erfindungsgemäße textile Fäden, die eine solche gummielastische Seele aufweisen, können für die Herstellung von textilen Flächengebilden verwendet werden, die bei einer nachfolgenden Konfektionierung und Verarbeitung kurzzeitig auch höheren Temperaturen, wie beispielsweise bei der Vulkanisation oder Formgebung ausgesetzt werden.

Es ist aber auch möglich, als gummielastische Seele mit Vorteil solche Thermoplastischen Elastomere einzusetzen, die als Schmelzklebstoffe bekannt sind, wobei es sich um lösungsmittelfreie feste Produkte handelt, die für die Anwendung der Erfindung in Form extrudierter Monofile vorliegen und welche eine Aktivierungstemperatur von mindestens etwa 70°C aufweisen.

Als Schmelzklebstoffe kommen für die Erfindung zur Ausbildung der gummielastischen Seele in Frage die TPC als Polyester-Elastomer mit einer Wärmestandfestigkeit von 55 - 115°C, die TPA als Copolyamid-Elastomer mit einer Wärmestandfestigkeit von 100 - 120°C und die TPU als Polyurethan-Elastomer mit einer Wärmestandfestigkeit von 65 - 110°C.

Die den textilen Faden charakterisierenden Multifilamentgarne werden bevorzugt mit einer Feinheitsreißfestigkeit von mindestens 4,5 cN/dtex eingesetzt. Um die gewünschte Erhöhung der Reißdehnung des textilen Faden durch die Umzwirnung der gummielastischen Seele mit dem Multifilamentgarn zu erreichen, wird die Umzwirnung bevorzugt mit 100 - 400 Touren/m vorgenommen. Für hochfeste textile Fäden gemäß der Erfindung werden bevorzugt Multifilamentgarne mit einer Reißdehnung kleiner gleich 20 % eingesetzt. Die Multifilamentgarne werden bevorzugt mit hoher Thermostabilität und Wärmestandfestigkeit bei einer kurzzeitigen Gebrauchstemperatur von mindestens etwa 160°C, vorzugsweise 170°C oder mehr vorgesehen, insbesondere dann, wenn die aus den textilen Fäden herzustellenden Flächengebilde bei der nachfolgenden Verarbeitung und Konfektionierung höheren Temperaturen, wie Formgebungstemperaturen oder Vulkanisationstemperaturen bei der Heißvulkanisation kurzzeitig ausgesetzt sind.

Der Durchmesser der gummielastischen Seele, die Umzwirnung desselben mit Multifilamentgarn in Bezug auf die Anzahl der Windungen sowie die Dicke des Multifilamentgarnes sind bevorzugt aufeinander abzustimmen, wobei es von Vorteil ist, Multifilamentgarne von 250 - 1.100 dtex einzusetzen. Die Multifilamentgarne sind aus Filamenten mit einer Feinheit kleiner 10 µ zusammengesetzt, wobei beispielsweise ein Multifilamentgarn von 550 dtex etwa 85 - 90 Filamente einer Feinheit von 6 µ umfaßt.

Für die Umwicklung der gummielastischen Seele werden bevorzugt Multifilamentgarne aus hochfesten und sehr temperaturbeständigen Synthesefasern mit einer hohen Feinheitsreißfestigkeit und einer Reißdehnung unter 22 % eingesetzt, insbesondere Polyester der Terephthalsäure (Polyterephthalate) mit einer Reißdehnung bevorzugt von etwa 8 - 20 % und einer Feinheitsreißfestigkeit von etwa 4 - 9,5 cN/dtex, wobei bei den hochfesten Filamenten eine kurzzeitige Gebrauchstemperatur bis 180°C zulässig ist. Des weiteren sind bevorzugte hochfeste Synthesefasern auswählbar aus den Polyamiden, insbesondere Polyamid 6, Polyamid 66, Polyamid 610 und Polyamid MXD6 mit einer Reißdehnung von etwa 15 - 20 %, einer Feinheitsreißfestigkeit von etwa 4 - 9 cN/dtex und einer kurzzeitigen Gebrauchstemperatur von bis zu 180°C oder mehr. Eine weitere Gruppe hochfester Synthesefasern bilden solche aus vollaromatischen Polyamiden - Aramide - wie Poly-m-Phenylenisophthalamid und Poly-p-Phenylenterephthalamid mit Reißdehnungen von etwa 2 - 22 %, vorzugsweise etwa 2 - 6 %, Feinheitsreißfestigkeit von etwa 4 - 20 cN/dtex und einer kurzzeitigen Gebrauchstemperatur von bis zu 300°C. Für spezielle technische Fäden und Gewebe sind auch hochfeste und hochtemperaturbeständige Synthesefasern auf Basis von vollaromatischen Polyestern wie Polyarylaten, des weiteren hochfeste Synthesefasern aus aromatischen Polysulfiden und -sulfonen, wie Polyarylsulfone, Polyphenylensulfid, Polyaryletherketone, aromatische Polyimide wie Polyimid, Polybenzimidazol, Polyamidimid, Polyetherimid, Polyesterimid, Polyarylimid einsetzbar. Neben diesen hochfesten und hochtemperaturbeständigen Synthesefasern sind auch solche auf Basis von Fluorpolymeren einsetzbar, wie beispielsweise von den Fluorhomopolymeren Polytetrafluorethylen und Polychlortrifluorethylen und von den Fluor-Copolymerisaten Ethylen-Tetrafluorethylen-Copolymer, Polyfluorethylenpropylen. Für viele Anwendungen ist auch für die Auswahl der hochfesten Synthesefasern ausschlaggebend ihre Schwerentflammbarkeit, wie beispielsweise vollaromatische Polyamide oder Fluorpolymere. Die Aufzählung der Synthesefasern ist nicht abschließend, sondern beispielhaft.

Eine bevorzugte Ausbildung eines textilen Fadens gemäß der Erfindung zeichnet sich dadurch aus, daß er eine gummielastische Seele aus einem Monofil mit einem Durchmesser von 0,22 - 0,4 mm aus einem Thermoplastischen Elastomer mit einer Reißdehnung von mindestens 50 % und je eine die Seele mit 200 - 400 Touren/m in Z-Richtung und/oder in S-Richtung umgebendes hochfestes Multifilamentgarn von 250 - 1.100 dtex mit einer Reißdehnung von höchstens 20 % und einer Feinheitsreißfestigkeit von mindestens etwa 5 cN/dtex und einer kurzzeitigen Gebrauchstemperatur von mindestens 160°C aufweist und die Reißdehnung des textilen Fadens gegenüber der Reißdehnung des eingesetzten Multifilamentgarnes und damit die Dehnbarkeit um mindestens 20 %, vorzugsweise mindestens 50 % erhöht ist.

Die erfindungsgemäß aufeinander abgestimmten Parameter sowohl der gummielastischen Seele als auch der die hohe Festigkeit liefernden Multifilamentgarne und ihre Kombination zu dem textilen Faden ermöglichen, die hohe Festigkeit des Multifilamentgarnes zu erhalten und gleichzeitig die geringe Dehnbarkeit desselben durch die gummielastische Seele wesentlich zu erhöhen. Für die Erhöhung der Dehnbarkeit ist wesentlich, daß die gummielastische Seele sich dehnen kann, hierbei ihren Durchmesser verringern und durch die um die Seele gewickelten Multifilamentgarne aufgrund ihrer Wickellänge nachgeben und damit die erhöhte Dehnbarkeit des Fadens bei Erhalt der Reißfestigkeit ermöglichen.

Bei Einsatz von Schmelzklebstoffen für das die gummielastische Seele bildende Monofil ergibt sich eine wesentlich erhöhte Dehnbarkeit eines aus solchen erfindungsgemäßen textilen Fäden hergestellten Flächengebildes gegenüber einem Flächengebilde, das nur aus den entsprechenden Multifilamentgarnen gefertigt wurde dadurch, daß bei Anwendung von Druck und Temperatur mindestens in Höhe der Aktivierungstemperatur der Schmelzstoffe zwecks Verformung des Flächengebildes die gummielastische Seele schmilzt, wodurch die Dehnung durch Auseinanderziehen der in S- und/oder Z-Richtung gewickelten Multifilamentgarne der textilen Fäden ermöglicht wird.

Auch ein solches erfindungsgemäßes Flächengebilde weist eine wesentlich erhöhte Dehnung gegenüber Flächengebilden bestehend nur aus den analogen Multifilamentgarnen auf.

Die Kombination der Materialien für das Multifilamentgarn und die gummielastische Seele richten sich auch nach den hieraus herzustellenden textilen Flächengebilden und deren weitere Verwendung. Hierbei spielen auch Preisfaktoren eine Rolle. Vielfach sind textile Flächengebilde auf Basis von Polyesterfilamenten erwünscht und im Einsatz. Diese weisen eine hohe Reißfestigkeit bei relativ geringer Dehnung auf. Zur Erhöhung der Dehnbarkeit solcher aus Polyesterfilamenten hergestellten Flächengebilde - Polyestergewebe, Polyestergewirke, Polyestergelege - wird die Ausgestaltung eines textilen Fadens gemäß der Erfindung vorgeschlagen, der eine gummielastische Seele aus einem Monofil mit einem Durchmesser von 0,22 - 0,4 mm aus einem copolymeren Polyetherester mit einer Reißdehnung von etwa 50 - 60 % und einem die Seele mit 200 - 400 Touren/m in Z-Richtung und/oder S-Richtung umgebenden hochfesten Multifilamentgarn von 250 - 1.100 dtex aus hochfesten Polyesterfilamenten mit einer Reißdehnung von 14 - 19 % und einer Feinheitsreißfestigkeit von mindestens 6,0 cN/dtex und einer kurzzeitigen Gebrauchstemperatur von mindestens 170°C aufweist und die erzielbare Reißdehnung des textilen Fadens aus Multifilamentgarn und gummielastischer Seele etwa 35 - 40 % beträgt.

Ein textiles Flächengebilde, hergestellt aus erfindungsgemäßen textilen Fäden durch Weben, Wirken, Stricken oder als Gelege zeichnet sich dadurch aus, daß das Flächengebilde eine Reißfestigkeit entsprechend der Reißfestigkeit der eingesetzten Multifilamentgarne der textilen Fäden und eine gegenüber der Reißdehnung des eingesetzten Multifilamentgarnes erhöhte Reißdehnung und Dehnbarkeit entsprechend derjenigen der textilen Fäden aufweist, wobei das Flächengebilde bestehend aus den textilen Fäden mit einer gummielastischen Seele und den diesen umgebenden Multifilamentgarnen gegenüber einem Flächengebilde bestehend aus den gleichen Multifilamentgarnen wie die textilen Fäden jedoch ohne gummielastische Seele bei gleicher Reißfestigkeit eine erhöhte Dehnbarkeit und erhöhte Verformbarkeit aufweist. Insbesondere wird bei einem textilen Flächengebilde, das unter Einsatz erfindungsgemäßer textiler Fäden hergestellt ist, die Dehnbarkeit wesentlich erhöht. Damit kann die Zug-Dehnungsbelastung von Flächengebilden aus beispielsweise hochfesten Polyester-Multifilamentgarnen von bisher 20 - 22°% Reißdehnung gesteigert werden auf 38 - 42 % bei Einsatz erfindungsgemäßer textiler Fäden mit hochfesten Polyester-Multifilamentgarnen und beispielsweise einer gummielastischen Seele aus einem Copolyester-Elastomer (copolymerer Polyetherester).

Bei der Dehnbarkeit von textilen Flächengebilden ist zu beachten, daß zusätzlich zu dem Beitrag der Dehnung der eingesetzten textilen Fäden noch eine Konstruktionsdehnung aufgrund der Verbindungsart des textilen Flächengebildes, beispielsweise Webart, Wirkart hinzukommt. Eine solche Erhöhung der Dehnbarkeit eines textilen Flächengebildes liegt maximal im Bereich von 5 - 6 %. Durch Einsatz der erfindungsgemäßen textilen Fäden läßt sich jedoch die Dehnbarkeit des textilen Flächengebildes bei Erhalt der Reißfestigkeit um wenigstens 20 %, vorzugsweise jedoch um 50 % und mehr problemlos erhöhen. Damit ist es möglich, erfindungsgemäße textile Flächengebilde wesentlich stärker zu verformen, beispielsweise Ecken auszubilden, die die gleiche Reißfestigkeit aufweisen, wie sich anschließende ebene nicht verformte Flächen aus dem gleichen Material.

Für hochfeste und schwer entflammbare textile Flächengebilde und hieraus zu formende dreidimensionale Körpergebilde werden für die textilen Fäden bevorzugt hochfeste Multifilamentgarne aus Aramiden, bevorzugt Poly-pphenylenterephthalamid mit einer Reißdehnung von 2 - 5 % und einer Feinheitsreißfestigkeit von etwa 14 - 20 cN/dtex eingesetzt. Die gummielastische Seele mit einer wesentlich höheren Reißdehnung, vorzugsweise mehr als 50 %, erhöht nicht nur die Dehnbarkeit des erfindungsgemäßen textilen Fadens, sondern auch die Dehnbarkeit und damit größere Verformbarkeit - Verformungsgrad - von hieraus gefertigten textilen Flächengebilden.

Gemäß einem weiteren Vorschlag der Erfindung werden textile Flächengebilde hergestellt aus erfindungsgemäßen textilen Fäden mit einem Elastomer, wie einem vulkanisierbaren Kautschuk oder einem härtbaren Kunststoff beschichtet. Die so beschichteten textilen Flächengebilde können als Verbundwerkstoff in noch unvernetztem und unausgehärtetem Zustand einer Verformung zu einem gewünschten Körpergebilde unterworfen werden, wobei diese Verformung unter Anwendung von Druck und Wärme erfolgen kann und bei der Verformung gleichzeitig ein Verbinden der Schichten und bei entsprechender Temperatur auch ein Vulkanisieren und Aushärten der elastomeren Beschichtung erfolgen kann. Hierbei ermöglichen die erfindungsgemäßen textilen Flächengebilde mit hoher Dehnung eine starke Verformung in Verbindung mit der elastomeren Beschichtung. Die mechanische Festigkeit, Zug- und Reißfestigkeit wird durch die in dem Verbundwerkstoff enthaltenen Multifilamentgarne der Fäden des textilen Flächengebildes vorgegeben, und es können hochwertige Produkte, die auch hohen dynamischen und thermischen Belastungen standhalten müssen, gefertigt werden, wie beispielsweise Faltenbälge, Membranen, Förderbänder u.a.

Vorteilhafte Ausgestaltungen des textilen Flächengebildes sind den kennzeichnenden Merkmalen der Ansprüche 16 bis 20 entnehmbar. Gemäß einem Vorschlag der Erfindung ist diese besonders vorteilhaft für die Herstellung von dreidimensionalen Körpergebilden gemäß den Ansprüchen 21 und 22 und in Gestalt von Faltenbälgen, Membranen und Teilen hiervon gemäß Anspruch 23 einsetzbar. Faltenbälge oder Teile hiervon, bei denen eine Gewebeeinlage zwischen zwei Elastomerschichten eingebettet ist, sind beispielsweise in der DE 197 57 429 A1 beschrieben. Durch den Einsatz des erfindungsgemäßen textilen Flächengebildes ist es möglich, wie Körpergebilde mit sehr stark verformten Bereichen, welche eine Dehnung von 30 - 40 % oder mehr des Flächengebildes erfordern, Faltenbälge mit geraden Flächen und stark verformten Eckbereichen einteilig herzustellen, da durch die erhöhte Dehnbarkeit des erfindungsgemäßen textilen Fadens und damit des daraus hergestellten textilen Flächengebildes eine entsprechende Verformung bei Erhalt der Festigkeit und Dauerbelastbarkeit insbesondere der dynamischen Dauerbelastbarkeit der Faltenbälge gewährleistet ist.

Ein erfindungsgemäßer Faltenbalg zeichnet sich dadurch aus, daß das textile Flächengebilde aus den erfindungsgemäßen textilen Fäden zwischen zwei Elastomerschichten ausgewählt aus den vulkanisierbaren Kautschuken eingebettet und unter Anwendung von Druck und Wärme dreidimensional zu dem gewünschten Teil verformt und mit den elastomeren Schichten verbunden ist, wobei die Elastomerschichten vernetzen. Hierbei ist es möglich, das textile Flächengebilde gegebenenfalls mit einer dünnen Vorbeschichtung aus einem Elastomer zu versehen und entsprechend dicke Außenschichten aus Elastomer beidseitig auf das Flächengebilde aufzulegen und einen entsprechenden Verbundwerkstoff zum Herstellen eines einteiligen Faltenbalges vorzusehen.

Es ist auch möglich, je nach Anforderung an den Faltenbalg, zwei textile Flächengebilde mit einer Zwischenschicht aus Elastomer und entsprechenden Außenschichten aus Elastomer unter Anwendung von Druck und Wärme dreidimensional zu dem gewünschten Teil zu verformen, wobei die Schichten miteinander verbunden und die Elastomerschichten vernetzt werden.

Für die Beschichtung eines textilen Flächengebildes aus den erfindungsgemäßen textilen Fäden zum Herstellen eines elastischen dehnbaren und verformbaren Verbundwerkstoffes kommen insbesondere Elastomere aus natürlichen und synthetischen Kautschuken infrage, so daß die erhöhte Dehnbarkeit der textilen Fäden voll ausgenutzt werden kann. Nach einer Verformung zu gewünschten dreidimensionalen Körpergebilden kann dann durch irreversible Vernetzung das gewünschte Körpergebilde fixiert werden, wobei dieses aufgrund der erfindungsgemäßen eingesetzten textilen Fäden eine hohe Dehnbarkeit, Elastizität und dynamische Dauerbeanspruchbarkeit aufweist. Als Elastomere kommen beispielsweise u.a. in Frage: ChloroprenKautschuk, Fluor-Kautschuk, Silicon-Kautschuk, Urethan-Kautschuk, Nitril-Butadien-Kautschuk, Nitril-Chloropren-Kautschuk.

Die Erfindung ist in der Zeichnung schematisch dargestellt und wird anhand dessen näher erläutert. Es zeigen:
- Figur 1: die Bestandteile des textilen Fadens 1 gemäß der Erfindung,
- Figur 2: den textilen Faden unbelastet auszugsweise,
- Figur 3: den textilen Faden gemäß Figur 2 in gedehnter Position.

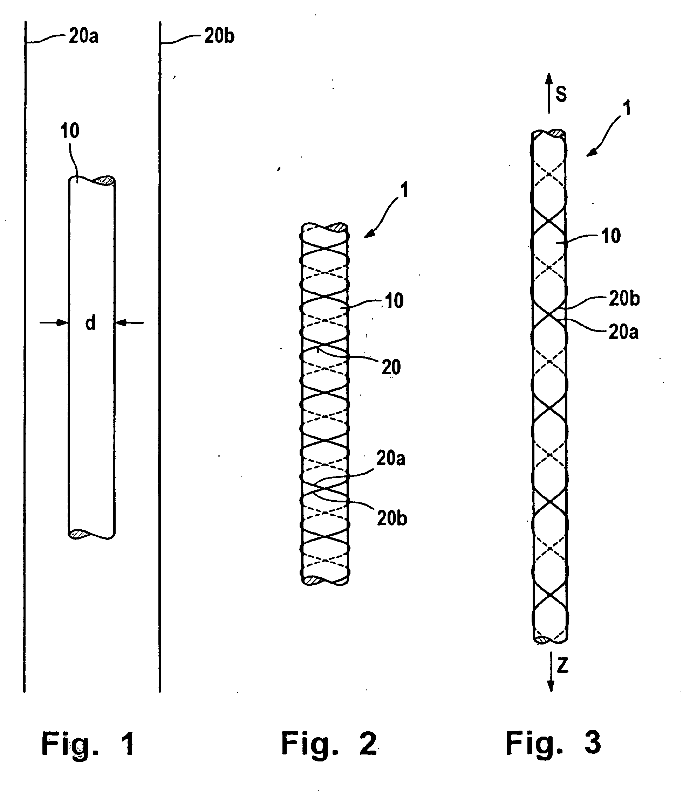

Der textile Faden 1 setzt sich gemäß Figur 1 aus einer gummielastischen Seele 10 aus einem Thermoplastischen Elastomer und zwei Multifilamentgarnen 20a, 20b zusammen, welche aus hochfesten, vorzugsweise hochtemperaturbeständigen Synthesefasern bestehen. Die Filamentgarne 20a und 20b werden nacheinander in S-Richtung und/oder Z-Richtung, beispielsweise S- und Z-Richtung mit vorzugsweise gleicher Tourenzahl (Touren/m) um die Seele 10 gezwirnt, so daß der in der Figur 2 schematisch dargestellte Faden 1 entsteht. Die hochfesten Multifilamentgarne 20a und 20b sind durch S- und Z-Drehung verschiebefest mit der Seele 10 zu dem textilen Faden 1 vereinigt. Die Multifilamentgarne 20a, 20b weisen eine gewünschte hohe Reißfestigkeit auf, bei einer entsprechend niedrigen Reißdehnung, die üblicherweise unter 22 % bei den eingesetzten hochfesten Synthesefasern für die Multifilamentgarne liegt. Die Reißfestigkeit des textilen Fadens gemäß Figur 2 wird durch die Reißfestigkeit der Multifilamentgarne 20a, 20b bestimmt. Die Reißdehnung des kombinierten Fadens gemäß Figur 2 aus gummielastischer Seele 10 und hochfesten Multifilamentgarnen hingegen erhöht sich und liegt bei einem Wert zwischen der Reißdehnung der gummielastischen Seele 10 und der Reißdehnung der Multifilamentgarne 20a, 20b. In der Figur 3 ist der textile Faden 1 gemäß Figur 2 in einer in Pfeilrichtung gestreckten - gedehnten - Stellung dargestellt, wobei der Durchmesser der Seele 10 sich verringert hat und entsprechend die gezwirnten Multifilamentgarne 20a, 20b aufgrund ihrer Wickellänge nachgeben und sich dem geringeren Durchmesser der Seele 10 anpassen, so daß insgesamt der Faden 1 eine wesentlich höhere Dehnung erfahren kann, als die Multifilamentgarne 20a, 20b für sich genommen allein. Je größer der Durchmesser d der Seele 10, desto größer wird die Wickellänge der diese umgebenden Multifilamentgarne 20a, 20b, desto höher wird die Dehnbarkeit des Fadens 1 und damit die eines hieraus gefertigten Gewebes.

Für die Herstellung technischer Gewebe ist ein bevorzugter Bereich des Durchmessers d für die Seele aus einem Monofil aus einem Thermoplastischen Elastomer 0,2 - 0,5 mm, bei Einsatz von Multifilamentgarnen von 250 -1.100 dtex mit einer Reißdehnung unter 22 % und bei einer Zwirnung von vorzugsweise im Bereich von 100 - 400 Touren/m für die Multifilamentgarne. Hierbei wird für S- und Z-Richtung jeweils gleiche Tourenzahl vorgesehen.

## Patentansprüche

1. Textiler Faden (1) mit einer Seele (10) und die Seele (10) umgebenden Multifilamentgarnen (20a, 20b), **dadurch gekennzeichnet, daß** hochfeste Multifilamentgarne aus organischen Synthesefasern mit einer Feinheitsreißfestigkeit von mindestens 3 cN/dtex und einer Reißdehnung kleiner 22 % zur Ausbildung eines textilen Fadens mit einer der Reißfestigkeit der Multifilamentgarne (20a, 20b) entsprechenden Reißfestigkeit eingesetzt sind und zur Erhöhung der Dehnbarkeit des textilen Fadens bei Erhalt der Reißfestigkeit desselben eine gummielastische Seele (10) aus einem Monofil aus einem Thermoplastischen Elastomer mit einer Reißdehnung von mindestens 35 % vorgesehen ist, welche von mindestens je einem der Multifilamentgarne in S-Richtung und/oder Z-Richtung umzwirnt ist.

2. Textiler Faden (1) nach Anspruch 1, **dadurch gekennzeichnet, daß** als gummielastische Seele (10) ein Monofil mit einem Durchmesser von mindestens 0,15 mm - 1,0 mm oder mehr vorgesehen ist.

3. Textiler Faden (1) nach Anspruch 1 oder 2, **dadurch gekennzeichnet, daß** als gummielastische Seele (10) ein Monofil mit einer Reißdehnung von mindestens 50 % vorgesehen ist.

4. Textiler Faden (1) nach einem der Ansprüche 1 bis 3, **dadurch gekennzeichnet, daß** als gummielastische Seele (10) ein Monofil aus einem Thermoplastischen Elastomer auf Polyamidbasis (TPA) oder Copolyesterbasis (TPC) oder Urethanbasis (TPU) vorgesehen ist.

5. Textiler Faden (1) nach einem der Ansprüche 1 bis 4, **dadurch gekennzeichnet, daß** ein Thermoplastisches Elastomer für die Seele (10) vorgesehen ist, das eine kurzzeitige Gebrauchstemperatur von mindestens etwa 145°C aushält.

6. Textiler Faden (1) nach einem der Ansprüche 1 bis 5, **dadurch gekennzeichnet, daß** Multifilamentgarne (20a, 20b) mit einer Feinheitsreißfestigkeit von mindestens 4,5 cN/dtex eingesetzt sind.

7. Textiler Faden (1) nach einem der Ansprüche 1 bis 6, **dadurch gekennzeichnet, daß** die Seele (10) mit den Multifilamentgarnen (20a, 20b) mit 100-400 Touren/m umzwirnt ist.

8. Textiler Faden (1) nach einem der Ansprüche 1 bis 7, **dadurch gekennzeichnet, daß** Multifilamentgarne (20a, 20b) mit einer Reißdehnung kleiner gleich 20 % eingesetzt sind.

9. Textiler Faden (1) nach einem der Ansprüche 1 bis 8, **dadurch gekennzeichnet, daß** Multifilamentgarne (20a, 20b) mit hoher Thermostabilität mit einer kurzzeitigen Gebrauchstemperatur von mindestens etwa 160°C eingesetzt sind.

10. Textiler Faden (1) nach einem der Ansprüche 1 bis 9, **dadurch gekennzeichnet, daß** Multifilamentgarne (20a, 20b) von 250-1.100 dtex verwendet sind.

11. Textiler Faden (1) nach einem der Ansprüche 1 bis 10, **dadurch gekennzeichnet, daß** Multifilamentgarne (20a, 20b) aus hochfesten Synthesefasern aus Polyester der Terephthalsäure, Polyamiden, vollaromatischen Polyamiden, Polyarylaten, Fluorpolymeren, aromatischen Polysulfiden und -sulfonen, Polyaryletherketonen, aromatischen Polyimiden eingesetzt sind.

12. Textiler Faden (1) nach einem der Ansprüche 1 bis 11, **dadurch gekennzeichnet, daß** er eine gummielastische Seele (10) aus einem Monofil mit einem Durchmesser von 0,22 - 0,4 mm aus einem Thermoplastischen Elastomer mit einer Reißdehnung von mindestens 50 % und je eine die Seele (10) mit 200 - 400 Touren/m in Z-Richtung und/oder in S-Richtung umgebendes hochfestes Multifilamentgarn von (20a, 20b) 250 - 1.100 dtex mit einer Reißdehnung von höchstens 20 % und einer Feinheitsreißfestigkeit von mindestens etwa 5 cN/dtex und einer kurzzeitigen Gebrauchstemperatur von mindestens 160°C aufweist und die Reißdehnung des textilen Fadens gegenüber der Reißdehnung des eingesetzten Multifilamentgarnes (20a, 20b) um mindestens 50 % erhöht ist.

13. Textiler Faden (1) nach einem der Ansprüche 1 bis 12, **dadurch gekennzeichnet, daß** er eine gummielastische Seele (10) aus einem Monofil mit einem Durchmesser von 0,22 - 0,4 mm aus einem copolymeren Polyetherester mit einer Reißdehnung von 50 - 60 % und einem die Seele mit 200 - 400 Touren/m in Z-Richtung und/oder S-Richtung umgebenden hochfesten Multifilamentgarn (20a, 20b) von 250 - 1.100 dtex aus hochfesten Polyesterfilamenten mit einer Reißdehnung von 14 - 19 % und einer Feinheitsreißfestigkeit von mindestens 6,0 cN/dtex und einer kurzzeitigen Gebrauchstemperatur von mindestens 170°C aufweist und die erzielbare Reißdehnung des textilen Fadens 35 - 40 % beträgt.

14. Textiler Faden (1) nach einem der Ansprüche 1 bis 13, **dadurch gekennzeichnet, daß** die Multifilamentgarne schwerentflammbar sind oder schwer entflammbar ausgerüstet sind.

15. Textiler Faden (1) nach Anspruch 4, **dadurch gekennzeichnet, daß** als gummielastische Seele (10) ein Schmelzklebstoff auf Basis eines Thermoplastischen Elastomers vorgesehen ist.

16. Textiles Flächengebilde hergestellt aus textilen Fäden (1) durch Weben, Wirken, Stricken gemäß einem oder mehreren der Ansprüche 1 bis 15, **dadurch gekennzeichnet, daß** das Flächengebilde eine Reißfestigkeit entsprechend der Reißfestigkeit der eingesetzten Multifilamentgarne (20a, 20b) der textilen Fäden und eine gegenüber der Reißdehnung des eingesetzten Multifilamentgarnes erhöhte Reißdehnung entsprechend derjenigen der textilen Fäden (1) aufweist, wobei das Flächengebilde bestehend aus den textilen Fäden (1) mit einer gummielastischen Seele (10) und den diesen umgebenden Multifilamentgarnen (20a-20b) gegenüber einem Flächengebilde bestehend aus den gleichen Multifilamentgarnen wie die textilen Fäden (1) jedoch ohne gummielastische Seele (10) bei gleicher Reißfestigkeit eine erhöhte Dehnbarkeit und erhöhte Verformbarkeit aufweist.

17. Textiles Flächengebilde nach Anspruch 16, **dadurch gekennzeichnet, daß** die Reißdehnung des Flächengebildes aus textilen Fäden (1) gegenüber einem Flächengebilde bestehend nur aus dem für die textilen Fäden (1) eingesetzten Multifilamentgarn (20a, 20b) um mindestens 50 % erhöht ist.

18. Textiles Flächengebilde nach Anspruch 16 oder 17, **dadurch gekennzeichnet, daß** es mit einem Elastomer, wie einem vulkanisierbaren Kautschuk oder einem härtbaren Kunststoffharz beschichtet ist.

19. Textiles Flächengebilde nach Anspruch 18, **dadurch gekennzeichnet, daß** das mit einem vulkanisierbaren Kautschuk oder einem härtbaren Kunststoff beschichtete Flächengebilde zu einem Körpergebilde verformt ist.

20. Textiles Flächengebilde nach Anspruch 19, **dadurch gekennzeichnet, daß das** zu einem Körpergebilde verformte, mit einem Kautschuk oder härtbaren Kunststoff beschichtete Flächengebilde durch Vulkanisation des Kautschuks oder Aushärtung des härtbaren Kunststoffharzes irreversibel vernetzt ist.

21. Körpergebilde, gebildet aus einem textilen Flächengebilde gemäß einem der Ansprüche 16 bis 20 aus textilen Fäden gemäß einem der Ansprüche 1 bis 15, wobei das textile Flächengebilde zwischen zwei Elastomerschichten ausgewählt aus vulkanisierbaren Kautschuken eingebettet und unter Anwendung von Druck und Wärme dreidimensional zu dem gewünschten Teil verformt und mit den Elastomerschichten verbunden ist, wobei die Elastomerschichten durch Vulkanisation vernetzt sind.

22. Körpergebilde nach Anspruch 21, **dadurch gekennzeichnet, daß** zwei textile Flächengebilde mit einer Zwischenschicht aus Elastomer ausgewählt aus den vulkanisierbaren Kautschuken vorgesehen sind.

23. Körpergebilde nach einem der Ansprüche 21 oder 22, **dadurch gekennzeichnet, daß** es als Faltenbalg, Membran oder Teil hiervon ausgebildet ist.

## Claims

1. A textile yarn (1) having a core (10) with multifilament yarns (20a, 20b) surrounding the core, **characterized in that** high-strength multifilament yarns (20a, 20b), made from organic synthetic fibres having a tear strength of at least 3 cN/dtex and a breaking elongation of less than 22%, are used to produce a textile yarn having a tear strength corresponding to the tear strength of the multifilament yarns (20a, 20b), and also to increase the extensibility of the textile yarn whilst retaining the tear strength of the same an elastomeric core (10) consisting of a monofilament comprising a thermoplastic elastomer having a breaking elongation of at least 35% is provided, which is wrapped with at least one of the multifilament yarns in the S- and/or Z-direction in each case.

2. A textile yarn (1) according to claim 1, **characterized in that** a monofilament having a diameter of at least 0.15 mm - 1.0 mm or more is provided as the elastomeric core (10).

3. A textile yarn (1) according to claim 1 or 2, **characterized in that** a monofilament having a breaking elongation of at least 50% is provided as the elastomeric core (10).

4. A textile yarn (1) according to any one of claims 1 to 3, **characterized in that** a monofilament made from a thermoplastic elastomer based on polyamide (TPA) or copolyester (TPC) or urethane (TPU) is provided as the elastomeric core (10).

5. A textile yarn (1) according to any one of claims 1 to 4, **characterized in that** a thermoplastic elastomer is provided for the core (10), which can withstand a temperature during use of at least about 145°C for short periods of time.

6. A textile yarn (1) according to any one of claims 1 to 5, **characterized in that** multifilament yarns (20a, 20b) having a tear strength of at least 4.5 cN/dtex are used.

7. A textile yarn (1) according to any one of claims 1 to 6, **characterized in that** the core (10) is wrapped with the multifilament yarns (20a, 20b) at a rate of 100 - 400 turns/m.

8. A textile yarn (1) according to any one of claims 1 to 7, **characterized in that** multifilament yarns (20a, 20b) having a breaking elongation of less than or equal to 20% are used.

9. A textile yarn (1) according to any one of claims 1 to 8, **characterized in that** multifilament yarns (20a, 20b) with high thermostability and which can withstand a temperature during use of at least about 160°C for short periods of time are used.

10. A textile yarn (1) according to any one of claims 1 to 9, **characterized in that** multifilament yarns (20a, 20b) of 250 - 1,100 dtex are used.

11. A textile yarn (1) according to any one of claims 1 to 10, **characterized in that** multifilament yarns (20a, 20b) made from high-strength synthetic fibres comprising polyester from terephthalic acid, polyamides, fully aromatic polyamides, polyarylates, fluoropolymers, aromatic polysulphides and sulphones, polyaryletherketones or aromatic polyimides are used.

12. A textile yarn (1) according to any one of claims 1 to 11, **characterized in that** it has an elastomeric core (10) comprising a monofilament with a diameter of 0.22 - 0.4 mm, made from a thermoplastic elastomer having a breaking elongation of at least 50%, and high-strength multifilament yarn (20a, 20b) of 250 - 1,100 dtex having a breaking elongation of at most 20%, a tear strength of at least about 5 cN/dtex, and which can withstand a temperature during use of at least 160°C for short periods of time, which yarn is wrapped around the core (10) at a rate of 200 - 400 turns/m in the Z-and/or S-directions in each case, the breaking elongation of the textile yarn being at least 50% higher than the breaking elongation of the multifilament yarn (20a, 20b) used.

13. A textile yarn (1) according to claims 1 to 12, **characterized in that** it has an elastomeric core (10) consisting of a monofilament with a diameter of 0.22 - 0.4 mm comprising a polyetherester copolymer having a breaking elongation of 50 - 60%, and a high-strength multifilament yarn (20a, 20b) of 250 - 1,100 dtex made from high-strength polyester filaments having a breaking elongation of 14-19% and a tear strength of at least 6.0 cN/dtex and which can withstand a temperature during use of at least 170°C for short period of time, which yarn is wrapped around the core at a rate of 200 - 400 turns/m in the Z- and/or S-direction, the achievable breaking elongation of the textile yarn being 35 - 40%.

14. A textile yarn (1) according to any one of claims 1 to 13, **characterized in that** the multifilament yarns (20a, 20b) are flame-retardant or are finished with a flame-retardant agent.

15. A textile yarn (1) according to claim 4, **characterized in that** a hotmelt adhesive based on a thermoplastic elastomer is provided as the elastomeric core (10).

16. A textile substrate produced by weaving, warp knitting or weft knitting textile yarns (1) according to one or several of claims 1 to 15, **characterized in that** the substrate has a tear strength, which corresponds to the tear strength of the multifilament yarns (20a, 20b) used in the textile yarns, and a higher breaking elongation than the breaking elongation of the multifilament yarn used, corresponding to that of the textile yarns (1), the substrate comprising the textile yarns (1), which comprise an elastomeric core (10) with these multifilament yarns (20a, 20b) wrapped around it, exhibiting, with the same tear strength, a higher extensibility and greater mouldability than a substrate comprising the same multifilament yarns as the textile yarns (1) but without an elastomeric core (10).

17. A textile substrate according to claim 16, **characterized in that** the breaking elongation of the substrate made from textile yarns (1) is at least 50% higher than that of a substrate comprising only the multifilament yarn (20a, 20b) used for the textile yarns (1).

18. A textile substrate according to claim 16 or 17, **characterized in that** it is coated with an elastomer, such as a vulcanizable rubber or a curable synthetic resin.

19. A textile substrate according to claim 18, **characterized in that** the substrate that has been coated with a vulcanizable rubber or curable resin is moulded into a shaped body.

20. A textile substrate according to claim 19, **characterized in that** the coated substrate that has been coated with a rubber or curable resin and moulded into a shaped body is irreversibly crosslinked by vulcanization of the rubber or curing of the curable resin.

21. A shaped body, formed from a textile substrate according to any one of claims 16 to 20 made from textile yarns according to any one of claims 1 to 15, the textile substrate being embedded between two elastomer layers selected from the group consisting of vulcanizable rubbers, and moulded into the required three-dimensional component and joined to the elastomer layers by means of heat and pressure, the elastomer layers being crosslinked by means of vulcanization.

22. A shaped body according to claim 21, **characterized in that** two textile substrates having an intermediate layer of elastomer selected from the group consisting of vulcanizable rubbers are provided.

23. A shaped body according to any one of claims 21 or 22, **characterized in that** it is formed as a folded bellows, a membrane, or as a part thereof.

## Revendications

1. Fil textile (1) doté d'une âme (10) et de fils multifilaments (20a, 20b) qui entourent l'âme (10), **caractérisé en ce que** l'on y utilise des fils multifilaments (20a, 20b) à haute résistance en fibres organiques de synthèse dont la résistance à la déchirure en fonction de la finesse est d'au moins 3 cN/dtex et l'allongement à la rupture inférieur à 22 %, pour former un fil textile dont la résistance à la déchirure correspond à la résistance à la déchirure des fils multifilaments (20a, 20b), et **en ce que** pour augmenter l'extensibilité du fil textile tout en conservant sa résistance à la déchirure, on prévoit une âme (10) en caoutchouc élastique constitué d'un monofil d'un élastomère thermoplastique dont l'allongement à la déchirure est d'au moins 35% et sur lequel on torsade au moins un des fils multifilaments dans la direction S et/ou dans la direction Z.

2. Fil textile (1) selon la revendication 1, **caractérisé en ce que** comme âme (10) en caoutchouc élastique, on prévoit un monofil d'un diamètre d'au moins 0,15 mm à 1,0 mm ou plus.

3. Fil textile (1) selon les revendications 1 ou 2, **caractérisé en ce que** comme âme (10) en caoutchouc élastique, on prévoit un monofil dont l'allongement à la déchirure est d'au moins de 50%.

4. Fil textile (1) selon l'une des revendications 1 à 3, **caractérisé en ce que** comme âme (10) en caoutchouc élastique, on prévoit un monofil en élastomère thermoplastique à base de polyamide (TPA), à base de copolyester (TPC) ou encore à base d'uréthane (TPU).

5. Fil textile (1) selon l'une des revendications 1 à 4, **caractérisé en ce que** l'on prévoit pour l'âme (10) un élastomère thermoplastique qui résiste brièvement à une température d'utilisation d'au moins environ 145°C.

6. Fil textile (1) selon l'une des revendications 1 à 5, **caractérisé en ce que** l'on utilise des fils multifilaments (20a, 20b) dont la résistance à la déchirure en fonction de la finesse est d'au moins 4,5 cN/dtex.

7. Fil textile (1) selon l'une des revendications 1 à 6, **caractérisé en ce que** l'on torsade autour de l'âme (10) des fils multifilaments (20a, 20b) à raison de 100 à 400 tours/m.

8. Fil textile (1) selon l'une des revendications 1 à 7, **caractérisé en ce que** l'on utilise des fils multifilaments (20a, 20b) dont l'allongement à la déchirure est inférieur ou égal à 20%.

9. Fil textile (1) selon l'une des revendications 1 à 8, **caractérisé en ce que** l'on y utilise des fils multifilaments (20a, 20b) à haute stabilité thermique et qui résistent brièvement à une température d'utilisation d'au moins environ 160°C.

10. Fil textile (1) selon l'une des revendications 1 à 9, **caractérisé en ce que** l'on y utilise des fils multifilaments (20a, 20b) de 250 à 1 100 dtex.

11. Fil textile (1) selon l'une des revendications 1 à 10, **caractérisé en ce que** l'on y utilise des fils multifilaments (20a, 20b) en fibres de synthèse à haute résistance, en poly(ester d'acide téréphtalique), en polyamides, en polyamides complètement aromatiques, en polyarylates, en polymères fluorés, en polysulfures et polysulfones aromatiques, en polyaryléthercétones ou en polyimides aromatiques.

12. Fil textile (1) selon l'une des revendications 1 à 11, **caractérisé en ce qu'**il présente une âme (10) en caoutchouc élastique constitué d'un monofil d'un diamètre de 0,22 à 0,4 mm en élastomère thermoplastique dont l'allongement à la déchirure est de moins 50 % et, torsadé autour de l'âme (10) à raison de 200 à 400 tours/m dans la direction Z et/ou dans la direction S, un fil multifilaments (20a, 20b) à haute résistance et de 250 à 1 100 dtex dont l'allongement à la déchirure est de plus 20 %, dont le rapport entre la résistance à la déchirure et la finesse est d'au moins environ 5 cN/dtex et qui résiste qui résiste brièvement à une température d'utilisation d'au moins environ 160°C, l'allongement à la rupture du fil textile étant plus élevé d'au moins 50 % par rapport à l'allongement à la rupture du fil du filament (20a, 20b) utilisé.

13. Fil textile (1) selon l'une des revendications 1 à 12, **caractérisé en ce qu'**il présente une âme (10) en caoutchouc élastique constitué d'un monofil d'un diamètre de 0,22 à 0,4 mm en un copolyétherester dont l'allongement à la déchirure est 50 % à 60 % et, torsadé autour de l'âme (10) à raison de 200 à 400 tours/m dans la direction Z et/ou dans la direction S, un fil multifilaments (20a, 20b) en filaments de polyester à haute résistance et de 250 à 1 100 dtex dont l'allongement à la déchirure est de 14 à 19 %, dont le rapport entre la résistance à la déchirure et la finesse est d'au moins environ 6,0 cN/dtex et qui résiste qui résiste brièvement à une température d'utilisation d'au moins environ 160°C, l'allongement à la rupture possible du fil textile étant de 35 à 40 %.

14. Fil textile (1) selon l'une des revendications 1 à 13, **caractérisé en ce que** les fils multifilaments (20a, 20b) sont peu inflammables ou sont ignifugés.

15. Fil textile (1) selon la revendication 4, **caractérisé en ce que** comme âme (10) en caoutchouc élastique, il prévoit un adhésif à l'état fondu à base d'un élastomère thermoplastique.

16. Produit textile plat réalisé à partir de fils textiles (1) par tissage ou tricotage selon l'une ou plusieurs des revendications 1 à 15, **caractérisé en ce que** le produit plat présente une résistance à la déchirure qui correspond à la résistance à la déchirure des fils multifilaments (20a,20b) utilisés pour les fils textiles et un allongement à la rupture plus élevé que l'allongement à la rupture du fil qui correspond à celui des fils textiles (1) et qui est plus élevé que l'allongement à la rupture du fil multifilaments utilisé, le produit plat constitué des fils textiles (1) dotés d'une âme (10) en caoutchouc élastique et les fils multifilaments (20a, 20b) qui entourent cette dernière présentant pour une même résistance à la déchirure, une extensibilité accrue et une déformabilité accrue par rapport à celles d'un produit plat constitué des mêmes fils multifilaments que les fils textiles (1), mais sans l'âme (10) en caoutchouc élastique.

17. Produit textile plat selon la revendication 16, **caractérisé en ce que** l'allongement à la déchirure du produit plat constitué de fils textiles (1) est plus élevé d'au moins 50 % par rapport à celui d'un produit plat constitué uniquement du fil multifilaments (20a, 20b) utilisé pour les fils textiles (1).

18. Produit textile plat selon les revendications 16 ou 17, **caractérisé en ce qu'**il est revêtu d'un élastomère, par exemple un caoutchouc vulcanisable ou une résine de matière synthétique durcissable.

19. Produit textile plat selon la revendication 18, **caractérisé en ce que** le produit plat revêtu d'un caoutchouc vulcanisable ou d'une matière synthétique durcissable est transformé en un produit tridimensionnel.

20. Produit textile plat selon la revendication 19, **caractérisé en ce que** lé produit textile transformé en un produit tridimensionnel et revêtu de caoutchouc ou de matière synthétique durcissable est réticulé de manière irréversible par vulcanisation du caoutchouc ou durcissement de la résine de matière synthétique durcissable.

21. Produit textile tridimensionnel formé d'un produit textile plat selon l'une des revendications 16 à 20, en fils textiles selon l'une des revendications 1 à 15, le produit textile plat étant incorporé entre deux couches d'élastomère sélectionné parmi les caoutchoucs vulcanisables, étant déformé en trois dimensions pour obtenir la pièce souhaitée et étant relié aux couches d'élastomère en recourant à l'application d'une pression et de chaleur, les couches d'élastomère étant réticulées par vulcanisation.

22. Produit textile tridimensionnel selon la revendication 21, **caractérisé en ce qu'**il présente deux produits textiles plats avec une couche intermédiaire constituée d'un élastomère sélectionné parmi les caoutchoucs vulcanisables.

23. Produit textile tridimensionnel selon l'une des revendications 21 ou 22, **caractérise en ce qu'**il est configuré comme soufflet, membrane ou parties de ces éléments.
